# EUROPEAN PATENT APPLICATION

(11) **EP 4 456 515 A1**
(43) Date of publication of application: **30.10.2024**
(21) Application number: 24173112.4
(22) Date of filing: 29.04.2024
(51) Int. Cl.: H04L 67/10, H04W 28/02

(54) **METHOD AND SMART HIGH AVAILABILITY SYSTEM FOR EMBB/URLLC COMBINATIONS**

(30) Priority: 28.04.2023 IN 202321030719; 26.04.2024 US 202418647300
(71) Applicant: Mavenir Systems, Inc., Richardson, TX 75081 (US)
(72) Inventor: KAUL, Suveer, 560064 Bangalore (IN); TANEJA, Mukesh, 560037 Bangalore (IN)
(74) Representative: dompatent von Kreisler Selting Werner - Partnerschaft von Patent- und Rechtsanwälten mbB

(57) **Abstract**

Systems and methods for classifying and assigning User Equipment (UE) traffic to multiple classes of pods. Pods are classified into critical traffic and non-critical traffic pods. UE can then be assigned and reassigned to pods based on service requirements.

## Description

### a. Field of the Disclosure

The present disclosure relates to systems and methods for radio access networks. The present disclosure is related to the design of operation, administration and management of various network elements of 4G, 5G, and further generations of a radio system.

### OVERVIEW OF IMPLEMENTATIONS

Described are implementations of a computer system, computer system components, methods, and computer program products configured to execute program instructions for the method for radio access network, and operation, administration and management of various network elements of 4G, 5G, and further generations of the radio access network system. The method is performed by a computer system that comprises one or more processors and a computer-readable storage medium encoded with instructions executable by at least one of the processors and operatively coupled to at least one of the processors.

In an implementation, method comprises:
at a network CU, establishing a plurality of Pod Classes including a critical Pod Class and a non-critical Pod Class;
classifying and assigning Pods to the plurality of Pod Classes;
monitoring QoS classes of DRBs of UEs that join the CU network;
determining if one or more of the UE DRBs correspond to one the plurality of Pod Classes; and
allocating the UEs to the Pod corresponding the one or more UEs DRB's Pod Class.

The method can further comprise:
choosing the non-critical Pod Class for the plurality of the Pods;
load balancing within the plurality of non-critical Pods;
using one of the plurality of non-critical Pods during an Attach procedure, or randomly choosing one of the Pod Classes from the plurality of Pod Classes;
load balancing within a plurality of Pods belonging to the randomly chosen Pod Class;
using one of the plurality of Pods from the randomly chosen Pod Class during the Attach procedure;
monitoring the QoS classes of the DRBs of the UEs CU network;
determining if the one or more UEs DRBs correspond to a Pod Class of the plurality of Pod Classes; and
allocating corresponding Pods to the Pod Class for the corresponding one or more UEs.

The method can further comprise:
setting a predetermined time period for observing if the one or more UEs use a high amount traffic for critical Pod Class corresponding to one of the plurality of Pod classes; and
activating the DRB for the one or more UEs to the critical Pod Class without allocating the one or more UEs to another of the plurality of Pod Classes.

The method can further comprise:
if a UE establishes a DRB with critical traffic and is not associated with the critical Pod Class, move the UE from its existing Pod Class to the critical Pod Class at the time of DRB establishment; or
if a UE establishes a DRB with non-critical traffic and is already associated with a critical Pod Class, but there is no longer any critical DRB active for that UE, move the UE from its existing critical Pod Class to the non-critical Pod Class.

The method can further comprise:
reclassifying one or more of the Pods, the reclassifying including:
if a first Pod of the plurality of Pods assigned to the critical Pod Class is not getting utilized by any UE for a time interval above a threshold, and if a Pod utilization in the non-critical Pod Class is above the threshold, and a Pod utilization in the non-critical UE Pod Class other than the first Pod is below the threshold, then reassigning the first Pod to the non-critical Pod Class; or
if some of the plurality of the critical Pods are underutilized, and one or more Pods belonging to the non-critical Pod Class are over utilized, reducing a number of the critical Pods by moving UE state information to a smaller number of the critical Pods and increasing the number of non-critical Pods. The method can further comprise: communicating parameters to an RIC; at the RIC, deciding a one or more of the plurality of the Pods for each Pod; and communicating the decision results to the CU-CP. The method can further comprise: using a non-real-time RIC or near-RT RIC as the RIC, wherein, if there are high number of the UEs carrying critical traffic, a near-real-time RIC is employed.

In an implementation the method comprises, where at a CU-CP, the plurality of Pod Classes comprises UE Entity Pod Classes including a critical UE Entity Pod Class and a non-critical UE Entity Pod Class. The method can further comprise:
choosing the non-critical UE Entity Pod Class for the plurality of the UE Entity Pods;
load balancing within the plurality of non-critical UE Entity Pods;
using one of the plurality of non-critical UE Entity Pods during an Attach procedure;
randomly choosing a UE Entity Pod Class from the plurality of UE Entity Classes, wherein the UE Entity Class includes the plurality non-critical UE Entity Pod Classes and a critical UE Entity Pod Class;
load balancing within the plurality of UE Entity Pods belonging to the randomly chosen UE Entity Pod Class;
using one of the plurality of UE entity pods from the randomly chosen UE Entity Pod Class during the Attach procedure;
monitoring the QoS classes of the DRBs of the UEs that join a Node Entity at the CU-CP network;
determining if the one or more the UEs DRBs that correspond to one the plurality of UE Entity Pod Classes; and
allocating UE Entity Pods to the UE Entity Class for the corresponding one or more UEs.

The method can further comprise:
setting a predetermined time period for observing if the one or more UEs use a high amount traffic for critical UE Entity Pod Class corresponding to one of the plurality of UE Entity Pod classes; and
activating the DRB for the one or more UEs to the critical UE Entity Pod Class without allocating the one or more UEs to another of the plurality of UE Entity Pod Classes.

The method can further comprise: if a UE establishes a DRB with critical traffic and is not associated with the Critical UE Entity Pod Class, moving the UE from its existing UE Entity Pod Class to the Critical UE Entity Pod Class at the time of DRB establishment; or if a UE establishes a DRB with non-critical traffic and is already associated with a critical UE Entity Pod Class, but there is no longer any critical DRB active for that UE, moving the UE from its existing critical UE Pod Class to the non-critical UE Entity Pod Class. The method can further comprise: when moving the UE from its existing UE Entity Pod Class to the critical UE Entity Pod Class at the time of DRB establishment, the CU-CP does load balancing within the Critical UE Entity Pod Class to identify a suitable the Critical UE Entity Pod Class or the CU-CP continues to support the UE using a critical UE Entity Pod from the existing critical UE Entity Pod Class. The method can further comprise: when the UE is moved from the existing critical UE Pod Class to the non-critical UE Entity Pod Class, if a UE Entity Pod utilization of the critical UE Pod Class Pods is above a threshold, or otherwise, the CU-CP continues to support this UE using a UE entity pod from its existing class of pods.

The method can further comprise:
reclassifying one or more of the UE Entity Pods, the reclassifying including:
if a first UE Entity Pod of the plurality of UE Entity Pods assigned to the critical UE Entity Pod Class is not getting utilized by any UE for a time interval above a threshold, and if a UE Entity Pod utilization in the non-critical UE Entity Pod Class is above the threshold, and a UE Entity Pod utilization in the non-critical UE Pod Class other than the first UE Entity Pod is below the threshold, then the first UE Entity Pod is reassigned to the non-critical UE Entity Pod Class; or
if some of the plurality of the critical UE Entity Pods are underutilized, and one or more UE entity pods belonging to the non-critical UE Entity Pod Class are over utilized, reducing a number of the critical UE Entity Pods by moving UE state information to a smaller number of the critical UE Entity Pods and increasing the number of non-critical UE Entity Pods. The method can further comprise: communicating parameters to an RIC, at the RIC, deciding a one or more of the plurality of the UE Entity Pods for each UE Entity Pod; communicating the decision results to the CU-CP. The method can further comprise: using a non-real-time RIC or near-RT RIC as the RIC, wherein, if there are high number of the UEs carrying critical traffic, a near-real-time RIC is employed.

The method can further comprise:
if a UE is anchored on a non-critical UE Entity Pod, and the UE establishes a new DRB with critical traffic, triggering, by the non-critical UE entity, a UE context transfer procedure within the CU-CP;
requesting, by the non-critical UE Entity Pod, that a Node Entity Pod assign a least loaded Critical UE Entity Pod in CU-CP;
assigning, by a load balancing algorithm running in the Node Entity Pod the Critical UE Entity Pod for the UE context transfer;
sending the assignment information as a response message to the non-critical UE entity pod;
triggering, by the non-critical UE entity pod, a context transfer procedure with Critical UE Entity Pod and
updating an IWF Pod with new routing information.

The method can further comprise:
if a UE is anchored on a critical UE Entity Pod, and the UE establishes a new DRB with non-critical traffic, triggering, by the critical UE entity, a UE context transfer procedure within the CU-CP;
requesting, by the critical UE Entity Pod, that a Node Entity Pod assign non-Critical UE Entity Pod in CU-CP;
assigning, by a load balancing algorithm running in the Node Entity Pod the non-Critical UE Entity Pod for the UE context transfer;
sending the assignment information as a response message to the critical UE entity pod;
triggering, by the critical UE entity pod, a context transfer procedure with non-critical UE Entity Pod; and
updating an IWF Pod with new routing information.

The method can further comprise:
assigning a UE Entity Pod of the plurality of UE Entity Pods to a UE; if the context of the UE from the assigned UE Entity Pod is to be moved to another UE Entity Pod of the plurality of UE Entity Pods, executing a new mapping of an AP-ID to the other UE Entity Pod at the IWF pod routing, by the IWF pod, incoming UE messages by first checking whether a suitable entry is available in a routing table to identify the other UE Entity pod for a given AP-ID, and if available, using the entry to route messages to the corresponding other UE Entity Pod, or if not available in the routing table, using the received AP-ID to identify an available UE Entity Pod and routing message using the available UE Entity Pod. For F1-C traffic between a DU and the CU-CP, the method can further comprise: uniquely identifying a logical connection associated with a UE over a F1 interface by a FLAP application layer signaling protocol; providing separate AP-IDs for each UE giving each of the plurality of UE Entity Pods a range of AP-IDs, and allocating UEs associated with the range of the AP-IDs to the respective plurality of UE Entity Pods.

In an implementation, where at a CU-UP, the plurality of Pod Classes comprise DPS Pod Classes including a critical DPS Pod Class and a non-critical DPS Entity Pod Class. The method can further comprise: a set of non-critical DPS pods being for eMBB PDUs / DRBs, and another set of critical DPS pods are for URLLC PDUs / DRBs, wherein each of a plurality of PDUs are assigned a critical DPS Pod or a non-critical DPS Pod depending on the service needed by the DRBs in each PDU.

The method can further comprise:
assigning each of the PDUs a separate DPS pod depending on the class of PDU traffic;
if a MBB non-critical DPS Pod fails, an IWF pod detects the failure and sends and eMBB Bearer release message towards CU-CP;
wherein (i) the context of the URLLC DRB as well as the eMBB PDU DRB using the URLLC critical DPS Pod can be protected, or (ii) the context of only the URLLC using the critical DRB Pod is protected and the context for the eMBB DRB is not protected.

The method can further comprise: having GTP-U tunnel IDs for the URLLC DRB between CU-UP and DU, and GTP U tunnel IDs for a PDU session carrying the URLLC DRB between UPF and CU-UP being protected.

In an implementation, the method comprises:
assigning each of the PDUs a separate DPS pod depending on the class of PDU traffic;
if a MBB non-critical DPS Pod fails, an IWF pod detects the failure and sends and eMBB Bearer release message towards CU-CP;
wherein (i) the context of the URLLC DRB as well as the eMBB PDU DRB using the URLLC critical DPS Pod can be protected, or (ii) the context of only the URLLC using the critical DRB Pod is protected and the context for the eMBB DRB is not protected.

In an implementation the method comprises, where at a CU-CP, the plurality of Pod Classes comprises Node Entity Pod Classes including a critical Node Entity Pod Class and a non-critical Node Entity Pod Class. The method can further comprise:
applying at least one critical Node Entity Class to at least one Node Entity Pod; and
synchronizing Node level information for the at least one critical Node Entity Class across an active Node Entity Pod and a standby Node Entity Pod,
wherein the Node level information includes user defined classification of the at least one Node Entity Critical Classes and user defined objects therefor. The method can further comprise: synchronizing only user defined objects from the active Node Entity Pod to the standby Node Entity Pod.

### BRIEF DESCRIPTION OF THE DRAWINGS

Figure 1 is a block diagram of a system architecture.
Figure 2 shows an example of a User Plane Stack.
Figure 3 shows an example of a Control Plane Stack.
Figure 4A shows an example of a Separation of CU (Centralized Unit) and DU (Distributed Unit).
Figure 4B shows an example of a Separation of CU-CP (CU-Control Plane) and CU-UP (CU-User Plane).
Figure 5 shows a DL (Downlink) Layer 2 Structure.
Figure 6 shows an exemplary logical flow for implementing an RB allocation policy.
Figure 7 shows an L2 Data Flow example.
Figure 8A shows an example of an O-RAN architecture.
Figure 8B shows an example of an O-RAN architecture.
Figure 9A illustrates a PDU Session architecture consisting of multiple DRBs.
Figure 9B illustrates a CU and DU view on PDU session, DRBs and GTP-U tunnels for a 5G network architecture.
Figure 10 shows an example of Cloud Native CU-CP CNF System Architecture.
Figure 11 illustrates an architecture for UE Entity scaling UE Entity Pods.
Figure 12 shows an example of Cloud Native CU-UP CNF System Architecture.
Figure 13A illustrates an exemplary architecture with n=2 classes for UE entity pods.
Figure 13B illustrates an exemplary architecture with n=3 classes for UE entity pods.
Figure 14 an example method for initial selection of a UE entity pod for a UE.
Figure 15A shows an example of a method for assignment of UE to a new pod for select set of UEs.
Figure 15B show an example of a method for assignment of UE to a new pod for select set of UEs.
Figure 16A shows an example method for policy based proactive reclassification of UE entity pods in a CU-CP instance.
Figure 16B shows an example method for policy based proactive reclassification of UE entity pods in a CU-CP instance with an RIC.
Figure 17 shows an example transitioning a UE entity pod classes.
Figure 18 shows an example method for efficient routing of messages from IWF pods to UE entity pods.
Figure 19 shows an exemplary architecture for management of DPS pods / CU-UP for eMBB-URLLC combinations.
Figure 20 shows an high level exemplary logical flow.
Figure 21 shows user defined context synchronization to a standby pod.

### DETAILED DESCRIPTION OF THE IMPLEMENTATIONS

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.
O-RAN.WG4.MP.0-R003-v13.00
3GPP TS 23.501 V 18.1.0 2023-04-05
3GPP TS 28.552_ V18.2.0 2023-03-30
3GPP TS 38.300 V 17.4.0 03-28-2023
3GPP TS 38.401 V 17.4.0 2023-04-03
3GPP TS 38.501 V 18.1.0 2023-04-05
3GPP TS 38.425 17.3.0, 2023-04-03

### Acronyms

3GPP: Third generation partnership project
5GC: 5G Core Network
5G NR: 5G New Radio
5QI: 5G QoS Identifier
ACK: Acknowledgement
ACLR: Gain and Adjacent Channel Leakage Ratio
ADC: Analog-to-Digital Converter
AM: Acknowledged Mode
APN: Access Point Name
ARP: Allocation and Retention Priority
ASIC: Application Specific Integrated Circuit
AWGN: Additive White Gaussian Noise
BFW: Beamforming weight
BS: Base Station
CNF: Cloud-Native Network Function
CP: Control Plane
C-RAN: cloud radio access network
CU: Centralized unit
CU-CP: Centralized Unit - Control Plane
CU-UP: Centralized Unit - User Plane
CQI: Channel Quality Indicator
DAC: Digital-to-Analog Converter
DC: Dual Connectivity
DCI: Downlink Control Information
DDDS: DL Data Delivery Status
DFE: Digital Front End
DL: Downlink
DMRS: Demodulation Reference Signal
DNN: Data Network Name
DPS: Data Plane Service
DRB: Data Radio Bearer
DU: Distributed unit
eNB: evolved Node B
eMBB: Enhanced Mobile Broadband
EPC: Evolved Packet Core
EN-DC
EP: Endpoint Pod
E-UTRA: Evolved Universal Terrestrial Radio Access
GBR: Guaranteed Bit Rate
gNB: gNodeB (5G base station)
gRPC: next generation Remote Procedure Call
GTP-U: General Packet Radio Service (GPRS) Tunnelling Protocol - User Plane
GW: Gateway
HA: High Availability
HW: Hardware
IoT: Internet of Things
IP: Internet Protocol
IntfMgr: Interface Manager
IWF: Interworking Function
L1: Layer 1
L2: Layer 2
L3: Layer 3
L4S: Low Latency, Low Loss and Scalable Throughput
LC: Logical Channel
MAC: Medium Access Control
MeNB: Master eNodeB
MIMO: multiple-in multiple-out
MME: Mobility Management Entity
MR-DC: Multi-Radio Dual Connectivity
M-plane: Management plane interface between SMO and O-RU
NACK: Negative Acknowledgement
NAS: Non-Access Stratum
NB: Narrowband
Near-RT RIC: Near-Real-Time RIC
NMS: Network Management System
NR: New Radio
NR-U: New Radio - User Plane
NSA: Non-Standalone Architecture
OFDM: orthogonal frequency-division multiplexing
O-RAN: Open Radio Access Network
PA: Power Amplifier
PDB: Packet Delay Budget
PDCP: Packet Data Convergence Protocol
PDU: Protocol Data Unit
PDCCH: Physical Downlink Control Channel
PDSCH: Physical Downlink Shared Channel
PHY: Physical Layer
PRG: Physical Resource block Group
PUCCH: Physical Uplink Control Channel
PUSCH: Physical Uplink Shared Channel
QCI: QoS Class Identifier
QFI: QoS Flow Id
QFI: QoS Flow Identifier
QoS : Quality of Service
RAT: Radio Access Technology
RB: Resource Block
RDI: Reflective QoS Flow to DRB Indication
RIC: RAN Intelligent Controller
RLC: Radio Link Control
RLC-AM: RLC Acknowledged Mode
RLC-UM: RLC Unacknowledged Mode
RMM: Radio resource management
RQI: Reflective QoS Indication
RRC: Radio Resource Control
RU: Radio Unit
SA: Standalone Architecture
SCTP: Stream Control Transmission Protocol
SDAP: Service Data Adaptation Protocol
S-GW: Serving Gateway
SINR: Signal-to-Interference and Noise Ratio
SMO: Service Management and Orchestration system
SN: Signal Node
SR: Scheduling Request
SRM: Service Resource Management
SRS: Sounding Reference Signal
TCP: Transmission Control Protocol
TEID: Tunnel Endpoint Identifier
U-plane or UP: User plane
UPF: User Plane Function
UE: user equipment
UL: uplink
UM: Unacknowledged Mode
URLLC: Ultra Reliance Low Latency Communication

Described are implementations of technology for a cloud-based Radio Access Networks (RAN), where a significant portion of the RAN layer processing is performed at a central unit (CU) and a distributed unit (DU). Both CUs and DUs are also known as the baseband units (BBUs). CUs are usually located in the cloud on commercial off the shelf servers, while DUs can be distributed. while the RF and real-time critical functions can be processed in the remote radio unit (RU).

### RAN Architectures

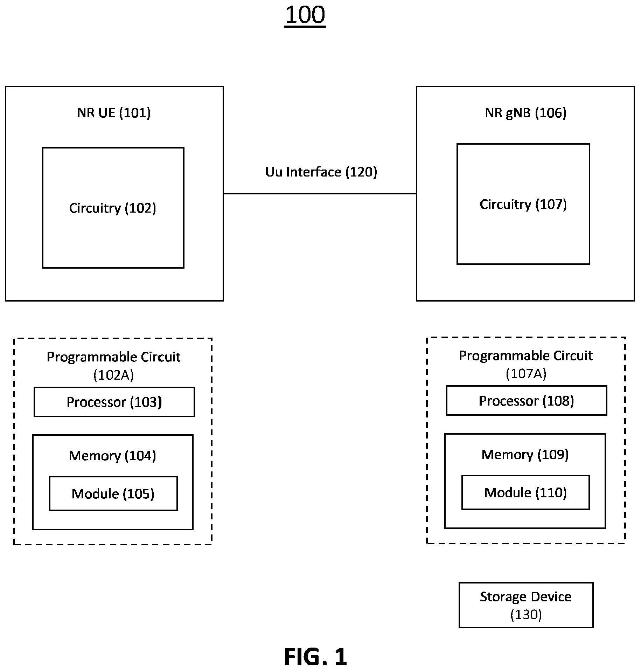

Figure 1 is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 may be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 may be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 may be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that may be embodied either as a stand-alone component or as an integrated configuration of a plurality of subordinate components. Thus, each of module 105 and 110 may be implemented as a single module or as a plurality of modules that operate in cooperation with one another.

While modules 110 are indicated as being already loaded into memories 109, and module 110 may be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE may be stationary or mobile. A UE includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, etc.), an entertainment device (e.g., a music device, a video device, a satellite radio, etc.), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN may be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and may can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which may be referred to as a CRAN and/or a vBBU. In these embodiments, the CRAN or vBBU may implement a RAN function split, such as a PDCP split wherein RRC and PDCP layers are operated by the CRAN/vBBU and other L2 protocol entities are operated by individual RAN nodes; a MAC/PHY split wherein RRC, PDCP, RLC, and MAC layers are operated by the CRAN/vBBU and the PHY layer is operated by individual RAN nodes; or a "lower PHY" split wherein RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs may include one or more remote radio heads (RRH), and the gNB-CU 151may be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and may be similar to eNBs in an 3GPP architecture.

In some implementations, access to a wireless interface can be scheduled, wherein a scheduling entity (e.g.: BS, gNB, etc.) allocates bandwidth resources for devices and equipment within its service area or cell. As scheduling entity can be configured to schedule, assign, reconfigure, and release resources for one or more subordinate entities. In some examples, a UE 101 (or other device) may function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities may communicate utilizing the scheduled resources.

BS or gNB 106 may be equipped with T antennas and UE 101 may be equipped with R antennas, where in general T≥1 and R≥1. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), etc.) and control information (e.g., CQI requests, grants, upper layer signaling, etc.) and can provide overhead symbols and control symbols. Processor 108 may also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, etc.) to obtain an output sample stream. Each modulator can further be configured to process (e.g., convert to analog, amplify, filter, and upconvert) the output sample stream to obtain a downlink signal. T downlink signals from modulators can be transmitted via T antennas.

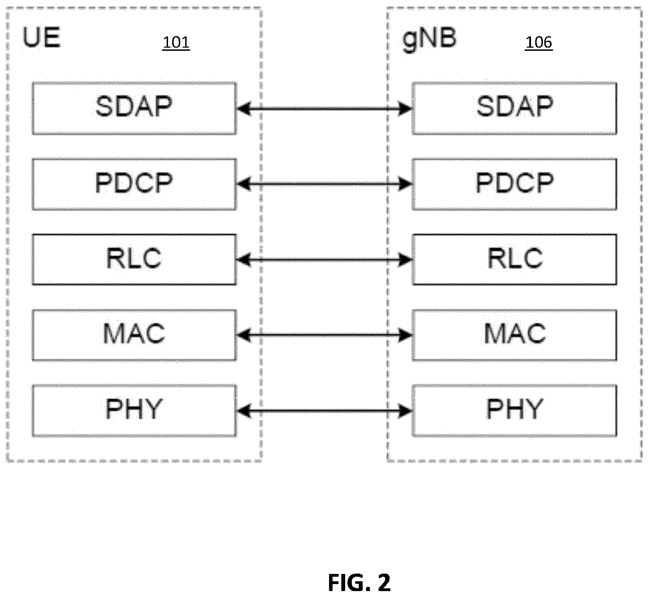

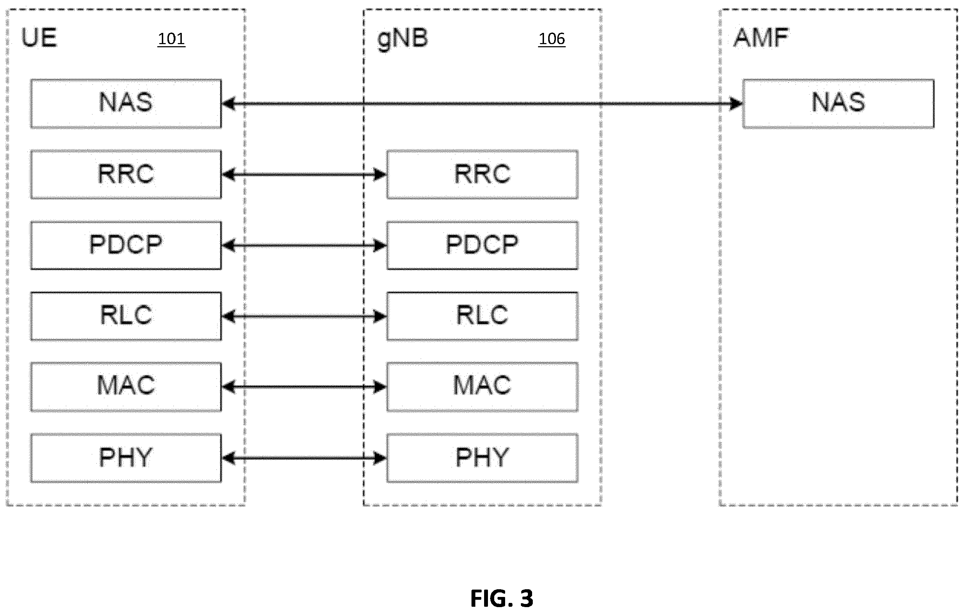

An overview of 5G NR Stacks is as follows. 5G NR (New Radio) user and control plane functions with monolithic gNB 106 are shown in the Figure 2 and Figure 3 . For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. Figure 2 shows an example of a User Plane Stack as descried in 3GPP TS 38.300. Figure 3 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

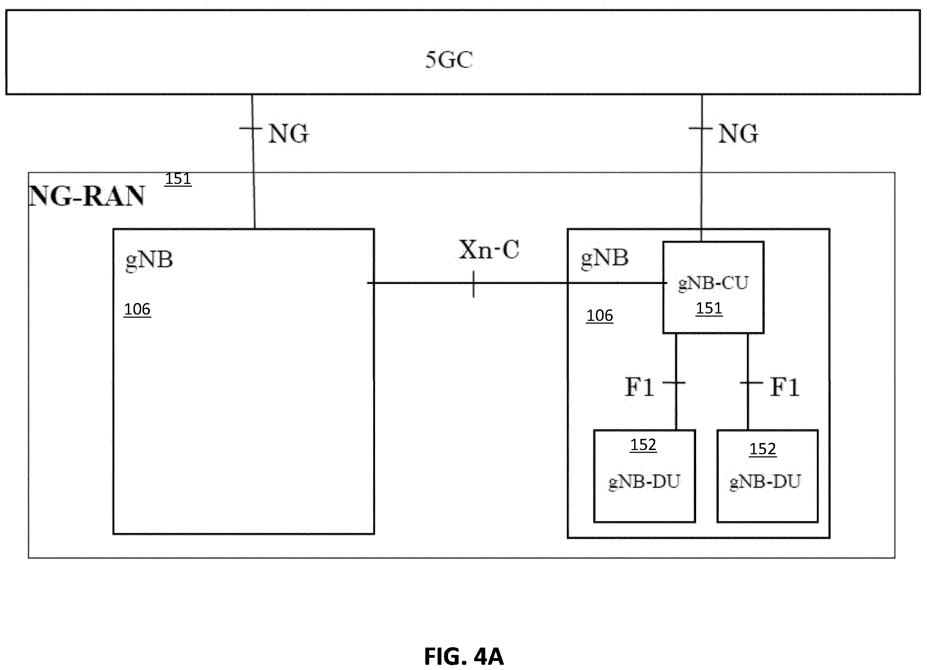

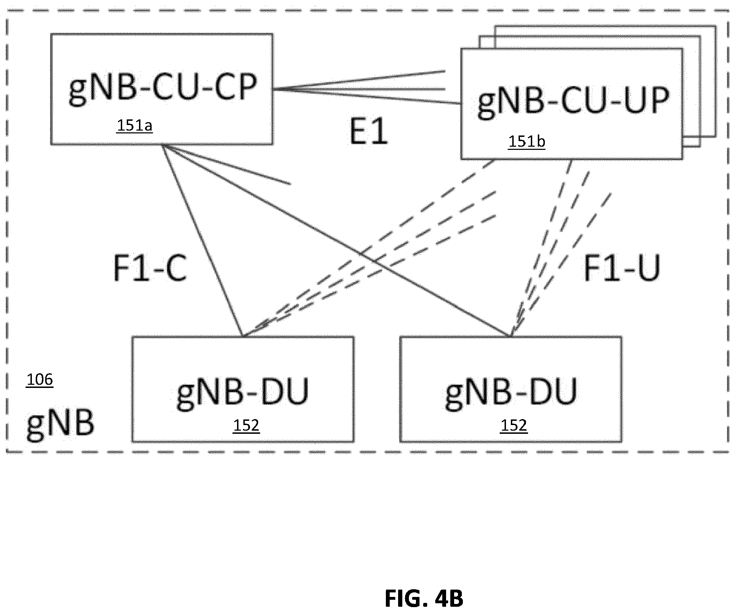

A gNB 106 may consist of a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to only one gNB-CU-CP 151a and one gNB-CU-UP 151b is connected to only one gNB-CU-CP. Figure 4A shows an example of an NG-RAN Architecture as described in 3GPP TS 38.501. Figure 4B shows an example of a Separation of CU-CP 151a (CU-Control Plane) 151a CU-UP 151b (CU-User Plane) as described in 3GPP TS 38.401.

A Layer 2 (L2) of 5G NR is split into the following sublayers is described in 3GPP TS 38.300):
∘ Medium Access Control (MAC): The MAC sublayer offers Logical Channels (LCs) to the RLC sublayer. This layer runs a MAC scheduler to schedule radio resources across different LCs (and their associated radio bearers).
∘ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.
∘ Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.
∘ Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

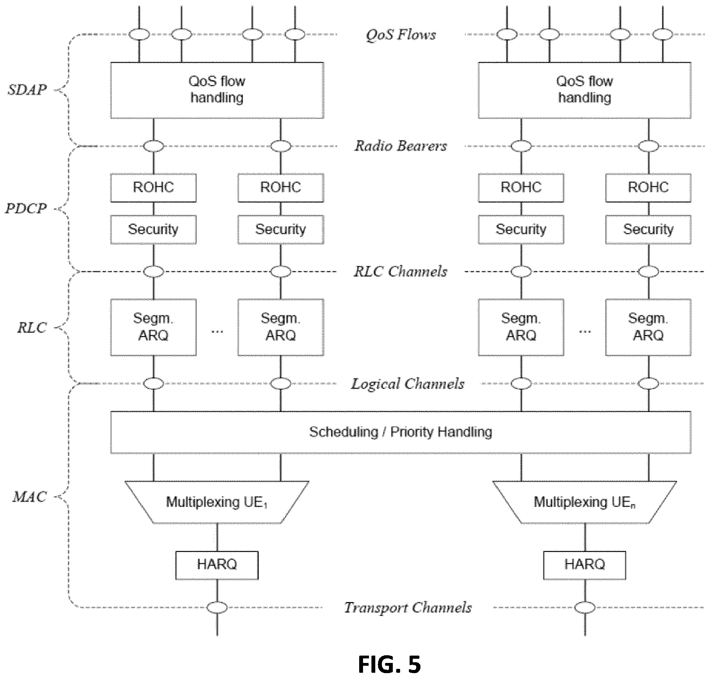

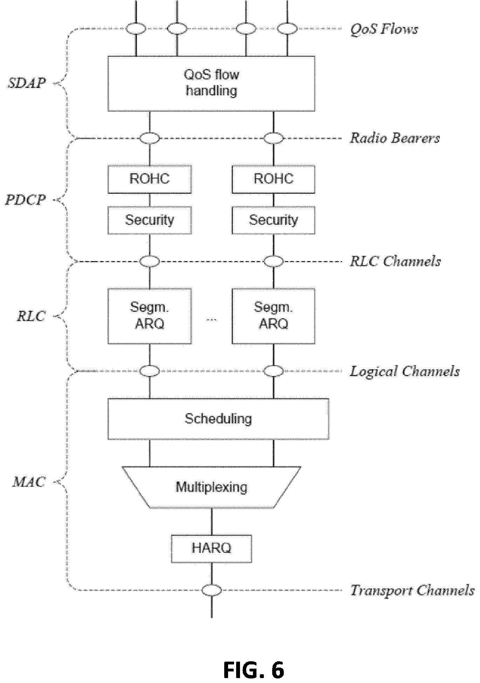

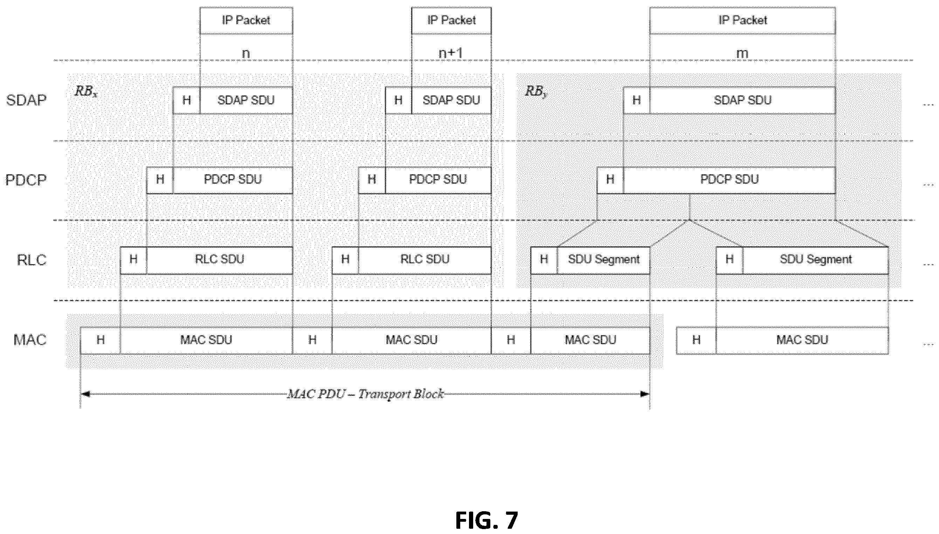

Figure 5 shows a DL (Downlink) Layer 2 Structure as described in 3GPP TS 38.300. Figure 6 shows an UL (uplink) Layer 2 Structure in accord with 3GPP TS38.300. Figure 7 shows an L2 Data Flow example in accord with 3GPP TS 38.300 ([H] denotes headers or subheaders in Figure 7.)

O-RAN, which is based on disaggregated components and connected through open and standardized interfaces is based on 3GPP NG-RAN. An overview of O-RAN with disaggregated RAN (CU, DU, and RU), near-real-time RIC 160 and non-real-time RIC is shown in the figure below. Here, DU (Distributed Unit) and CU (Centralized Unit) are typically implemented using COTS (Commercial off-the-shelf) hardware.

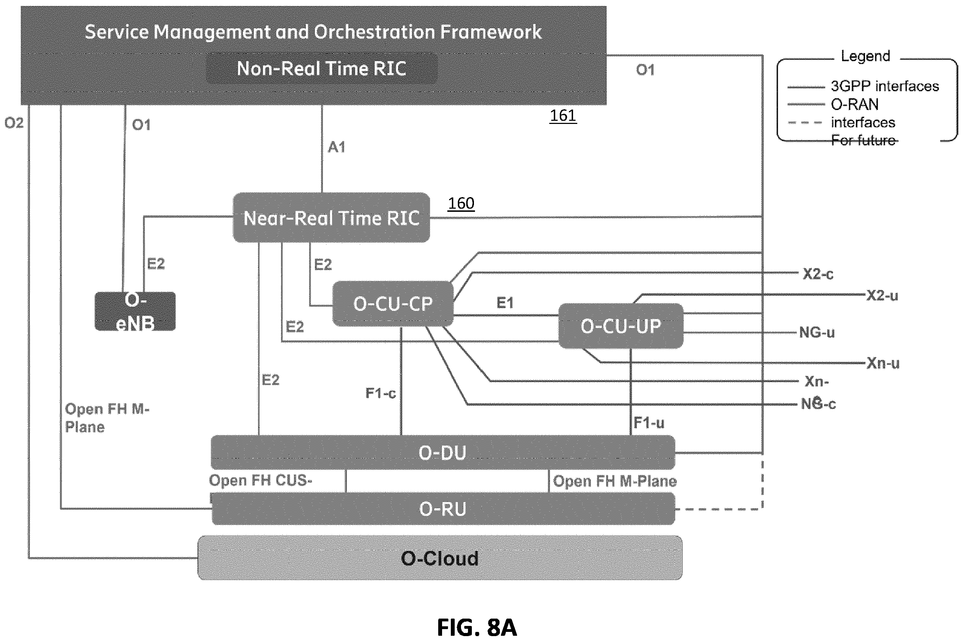

Figures 8A-8B show an example of an O-RAN architecture. In Figure 8A, the CU and the DU are connected using the F1 interface (with F1-C for control plane and F1-U for user plane traffic) over the midhaul (MH) path. One DU could host multiple cells (for example, one DU could host 24 cells) and each cell may support many users. For example, one cell may support 600 RRC Connected users and out of these 600, there may be 200 Active users (i.e.; users which have data to send at a given point of time).

A cell site could consist of multiple sectors and each sector may support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) may be served by five CU-UP instances (and one CU-CP instance).

DU can be located in a private data center or it could be located at a cell-site too. CU can also be located in a private data center or even hosted on a public cloud system. DU and CU can be tens of kilometers away. CU can communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC 160 using the E2 interface. The E2 interface is used to send data (e.g., user, cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

SMO manages multiple regional networks, and O-RAN NFs (O-CUs, Near-RT RIC 160, O-DUs) can be deployed in a regional data center which is connected to multiple cell sites or in cell site which is close to localized O-RU according to network requirements. Since SMO Functions and O-RAN NFs are micro services and deployment-independent logical functions, SMO Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO Functions and O-RAN NFs are available.

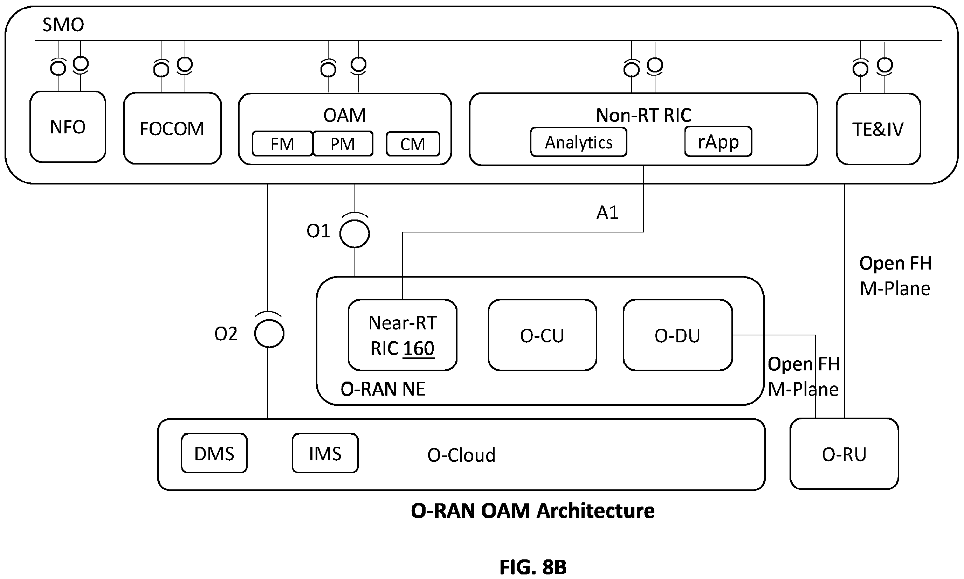

As shown in Figure 8B, an O-RAN compliant SMO defines TE&IV, RAN NF OAM, Non-RT RIC, and NFO, FOCOM services. SMO interacts with O-RAN NFs with O1 interface. SMO interacts with O-RU with Open FH M-Plane interface and interacts O-Cloud via the O2 interface. O-RAN NF OAM manages O-RAN NF CM, FM, PM and creates O-RAN NF inventory and topology in TE&IV. FOCOM/NFO manages O-Cloud resources and creates O-Cloud resources inventory and topology in TE&IV. Analytics/rApp in Non-RT RIC can subscribe O-RAN NFs PM/FM, O-Cloud PM/FM data based on O-RAN NF OAM a FOCOM/NFO. Analytics/rApp in Non-RT RIC can retrieve the O-RAN NF and O-Cloud resource inventory and topology.

### PDU Sessions, DRBs, QoS Flows

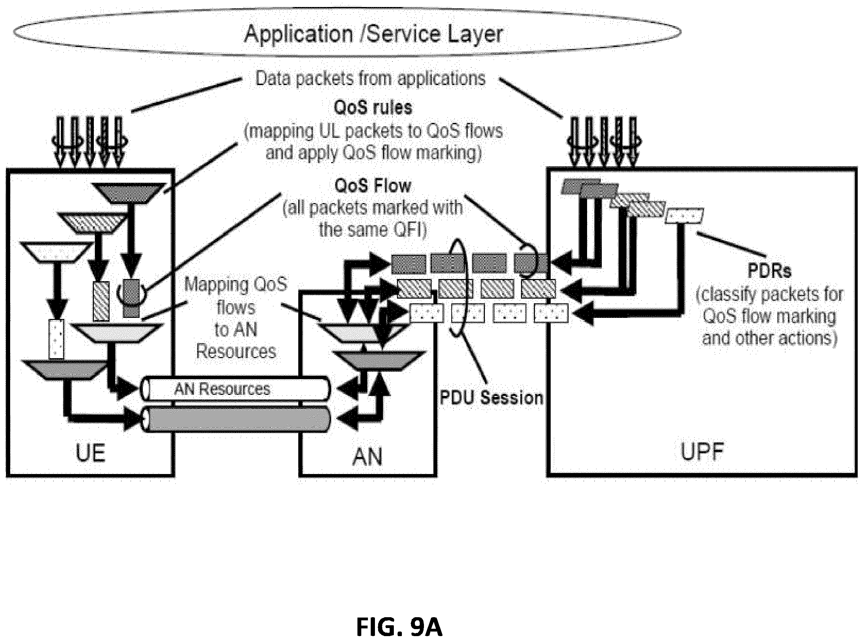

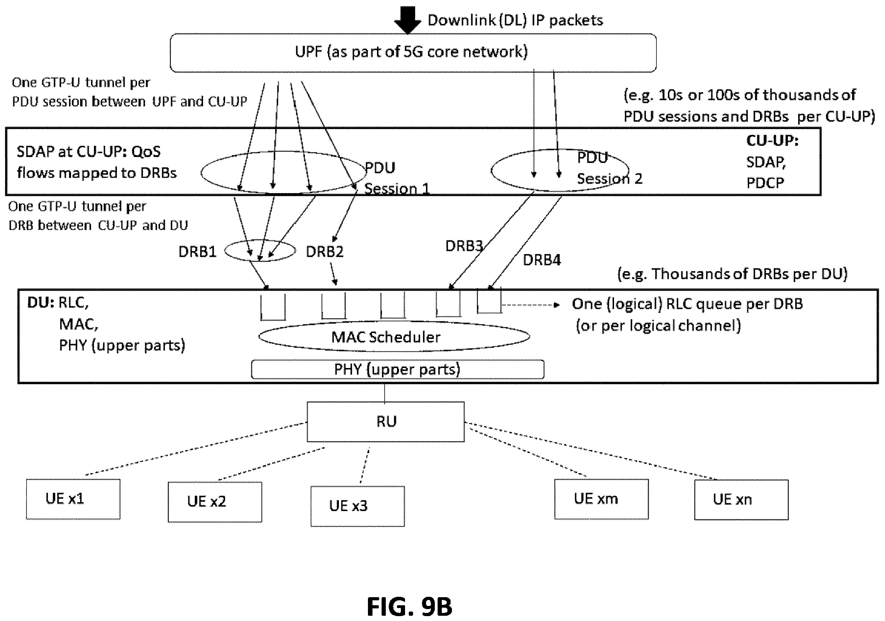

In 5G networks, PDU connectivity service is a service that provides exchange of PDUs between a UE and a data network identified by a Data Network Name (DNN). The PDU Connectivity service is supported via PDU sessions that are established upon request from the UE. This DNN defines the interface to a specific external data network. One or more QoS flows can be supported in a PDU session. All the packets belonging to a specific QoS flow have the same 5QI (5G QoS Identifier). Figure 9A illustrates a PDU Session architecture consisting of multiple DRBs. Each DRB may consist of multiple QoS flows (3GPP TS 23.501). Figure 9B illustrates a CU and DU view on PDU session, DRBs and GTP-U tunnels for a 5G network architecture.

As shown in Figures 9A-9B, a PDU session comprises the following:

A Data Radio Bearer (DRB) is between UE and CU in RAN and a NG-U GTP tunnel which is between CU and UPF (User Plane Function) in the core network. For the 3GPP's 5G network architecture, the transport connection between the base station (i.e., CU-UP) and User Plane Function (UPF) uses a single GTP-U tunnel per PDU session. The PDU session is identified using GTP-U TEID (Tunnel Endpoint Identifier). The transport connection between DU and CU-UP uses a single GTP-U tunnel per DRB.

### SDAP

The SDAP (Service Adaptation Protocol) Layer receives downlink data from the UPF across the NG-U interface. It maps one or more QoS Flow(s) onto a specific DRB. The SDAP header is present between the UE and the CU (when reflective QoS is enabled), and includes a field to identify the QoS flow within a specific PDU session. GTP-U user plane protocol includes a field to identify the QoS flow and is present between CU and UPF (in the core network).

### Flow Control between CU-UP and DU

Procedures and functionality of the F1-U interface are defined in 3GPP TS 38.425. This F1-U interface supports NR User Plane (NR-U ) protocol which provides support for flow control and reliability between CU-UP and DU for each DRB. Figure 9B shows DL Data, and Flow Control Feedback (DDDS) in 5G Networks. Downlink User Data (DUD) PDUs are used to carry PDCP PDUs from CU-UP to DU for each DRB. The Downlink Data Delivery Status (DDDS) message conveys Desired Buffer Size (DBS), Desired Data Rate (DDR) and some other parameters from DU to CU-UP for each DRB as part of flow control feedback.

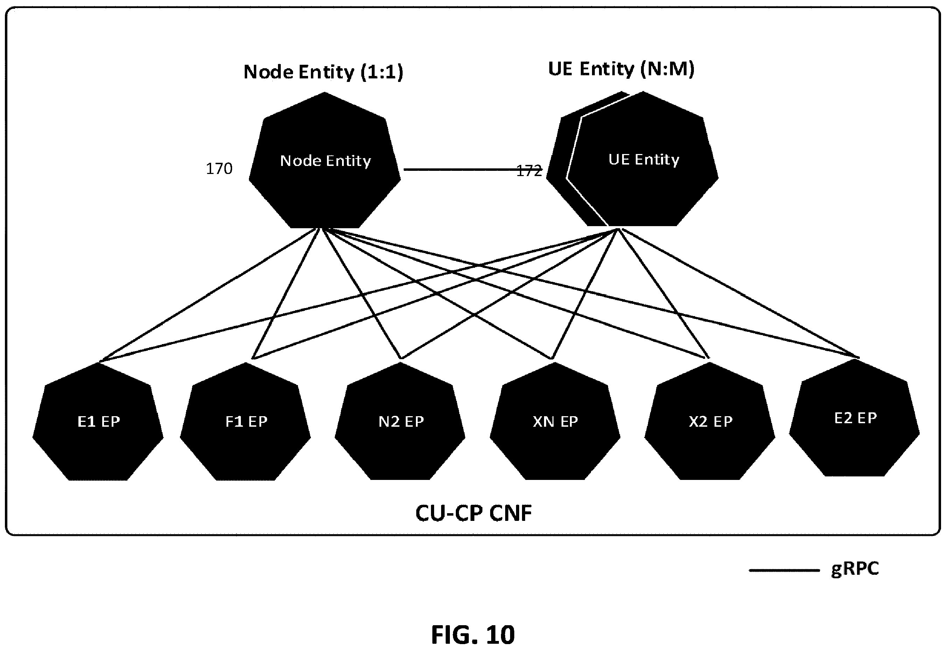

Figures 10-12 show Cloud Native CU CNF System Architectures.

Figure 10 shows an exemplary Cloud Native CU-CP CNF System Architecture. As shown in Figure 10:
- CU-CP 151a is a microservices based application hosting RRC and control plane part of the PDCP protocol. CU CP 151a functionality is split into multiple services, e.g., Node Entity, UE Entity and End Point Entity services.
- Pods (entity units shown in Figure10) communicate with each other using gRPC.
- UE Entity Pod 172 is auto scalable based on the UE count.
- End Point (EP) pod terminates the 3GPP interface with peer nodes such as CU-UP, DU, AMF, Near-RT RIC, peer eNB and peer gNB.
- Node Entity 170 handles all the incoming node level messages of various interfaces such as X2, F1, E1, Ng and Xn. Node Entity 170 sends outgoing node level messages to the corresponding SCTP end point with the final target of the message. For example, to send any F1-C message to DU, Node Entity 170 sends gRPC message to F1-C SCTP endpoint pod with the target DU Id so that F1-C pod shall be able to send to specific DU.
- UE Entity 172 implements RRC protocol and manages UE connection-oriented procedures. UE Entity allocates eGTPU TEIDs, supports measurement configuration, mobility decisions and key management.
- EP Entity: Multiple End Point microservices are supported in CU-CP CNF, one each for E1, F1, N2, Xn and X2 interfaces. It accepts the incoming SCTP connection from the peer nodes such as MeNB, 5G DU, CU-UP, and neighbor gNBs.

### Scaling

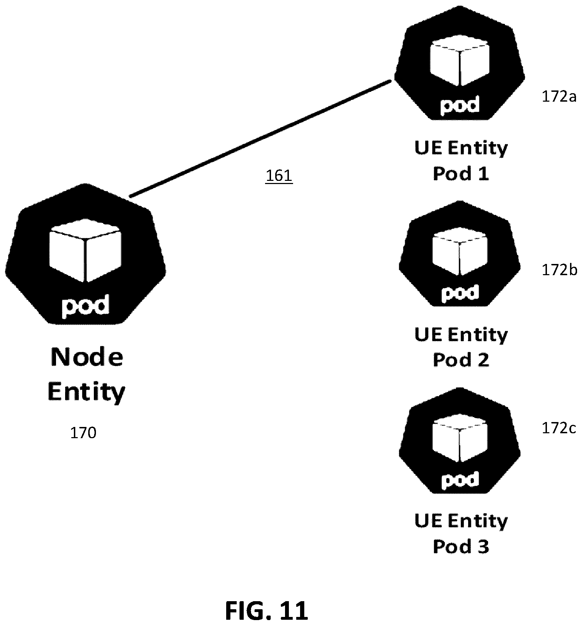

Figure 11 illustrates an architecture for UE Entity scaling (scale-in / scale out) for UE Entity Pods 172a, 172b, 172c. Scaling is a process of the increasing or decreasing the application pods to meet the traffic requirement. Scale-out and Scale-in help in using the right set of resources based on traffic conditions. A Node Entity 170 triggers UE Entity scale-out and scale-in based on the number of active users in CU-CP 151a.

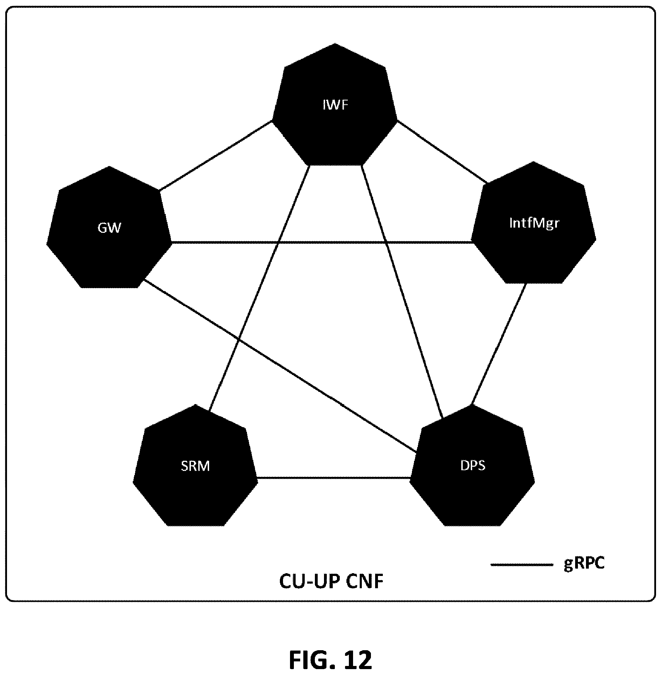

Figure 12 shows an exemplary Cloud Native CU-UP CNF System Architecture. As shown in FIG. 12
- Pods communicate with each other using gRPC (next generation Remote Procedure Call) protocol.
- Scaling is supported for DPS service.
- IWF: IWF pod 174 terminates 3GPP E2AP interface with CU-CP.
- GW: The GW service is responsible for distributing the incoming messages based on message type and routine information.
- IntfMgr (Interface Manager): The IntfMgr takes the responsibility of generic interface management service. It maintains the connection/peer information, controls whether to initiate or accept connection request.
- SRM: Handles application based scaling decisions.
- DPS: User plane processing is supported by DPS.

Failures and crashes are unavoidable in any software module. These unforeseen system restarts can cause service impacts to end users. For deployments such as URLLC, failures in providing service continuity after the failover can be catastrophic, as it can impact mission critical functions.

URLLC use cases and deployment have very stringent requirements on data as well as control plane. These include requirements of high reliability, very high availability, very low latency, consistent throughput and very low mobility interruption time. The mobility performance is one of the most important aspects of wireless communications, and this also applies to URLLC. For many URLLC services, mobility is a key requirement together with latency and reliability. NR needs to support mobility of up to 120 km/h for ordinary vehicles, 160 km/h for drones, 250 km/h for high-speed vehicles, and even up to 500 km/h for trains. Mobility interruption time (MII) is one of the key mobility performance KPI. MII means the shortest time duration supported by the system during which a user equipment (or terminal) cannot exchange user plane packets with any base station during transitions. The target for mobility interruption time should be 0 ms.

Some of the URLLC use cases are listed below in the tables (reference 3GPP TS 22.104) shown in Table 1 and Table 2 .

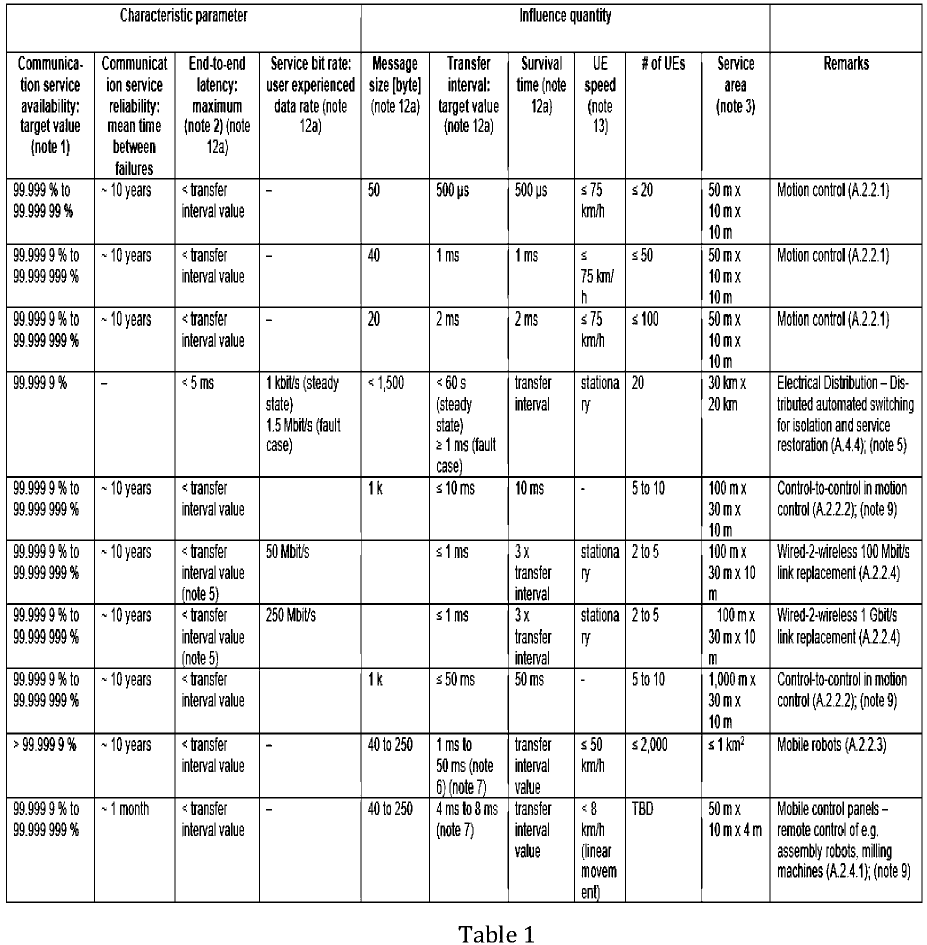

Table 1 shows periodic deterministic communication service requirements.

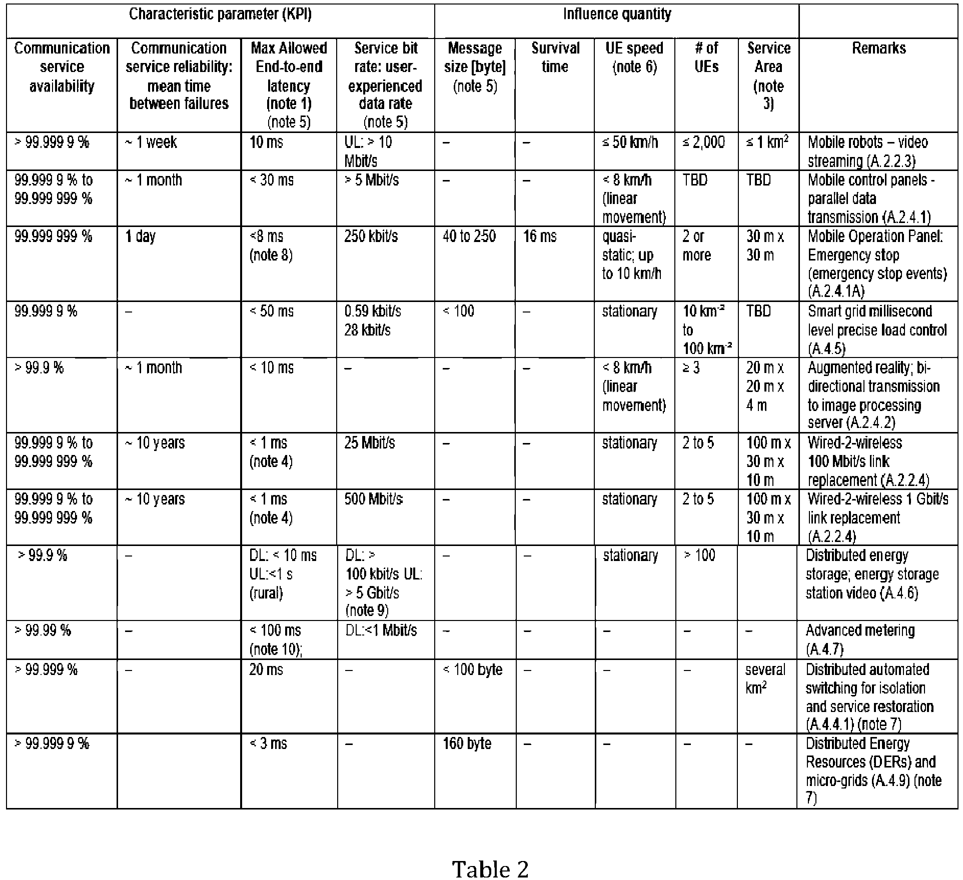

Table 2 shows aperiodic deterministic communication service requirements.

Some of the problems associated with the current conventional approach to addressing these requirements are as follows.

Stringent URLLC requirements are not supported by the CU system as of the present disclosure. It should be noted that these requirements are important for the data plane as well as the control plane.

One solution is to protect state information for all UEs in CU-CP, but this approach can be quite expensive. UE is assigned to a UE entity pod in CU-CP (e.g., by picking up the least-loaded UE entity pod). If a UE entity pod goes down, sessions for all UEs corresponding to the UE entity pod go down. This approach is not desirable for scenarios where some UEs are carrying more important data than other UEs (e.g., mission critical or URLLC data). This approach does not work well for eMBB - URLLC combination scenarios. Further, n:m for UE entity pods can be used, but the UE entity pod carrying higher priority UEs may not be protected. Protection depends on the sequence in which UE entity pods go down (when multiple UE entity pods go down). It is also expensive to protect state information for all UEs, and it is not desirable.

Similarly, one can try to protect state information for all PDU sessions and/or DRBs, but that can be quite expensive. A set of PDU sessions (and associated DRBs) are assigned to DPS pods in CU-UP. If a DPS pod goes down, traffic for all of the associated PDU sessions is impacted. It is expensive to protect state information of all DPS pods.

To cater to unforeseen events such as crashes or maintenance activities such as software upgrade, high availability (HA) solutions are supported by many legacy systems. Typically, active and standby nodes are deployed and the session data is synchronized in the standby node. Session data is either directly replicated in standby node, or an external database is used for replication. Total data volume for replication is equal to the size of each session data times the number of sessions supported. When an active node fails, the standby node takes an active role and continues to provide the service as it has all the session information available.

This type of legacy system is not scalable for high-capacity nodes (e.g., O-CU) which are deployed in centralized locations, and for which data replication volume can be in the order of hundreds of MBs. As the data volume is high, both replication and recovery become complex. Due to this reason, a switchover is not seamless and does not work on expected lines, which means a switchover can result in service impact and is not suitable to support use cases such as URLLC. To make things worse, the transaction rate is also very high and multiple other challenges exist for replicating the data in the standby nodes.

### Description of Implementations

Disclosed are implementations for efficient Management of CU-CP UE Entity pods for eMBB-URLLC Combination Scenarios.

Example Implementation 1: in a first implementation, described is a system and method for Efficient Management of CU-CP UE Entity pods for eMBB-URLLC Combination Scenarios.

### UE Entity Pods

As noted above, Figure 10 shows an example of a current conventional CU-CP logical architecture. In the example of in Figure 10, n=1 in a current conventional CU-CP architecture. In this example, the number of classes could depend on various factors, such as:
- URLLC vs. eMBB users (e.g., one Class of UE entity pods for eMBB users and another class for URLLC users);
- Emergency or High Priority users vs. medium / low priority users;
- VoLTE / VoNR vs. ViLTE / ViNR vs. less delay-sensitive users;
- PDU sessions belonging to specific slice with each Class of UE entity pods supporting certain types of slices; and
- Any other user defined criteria.

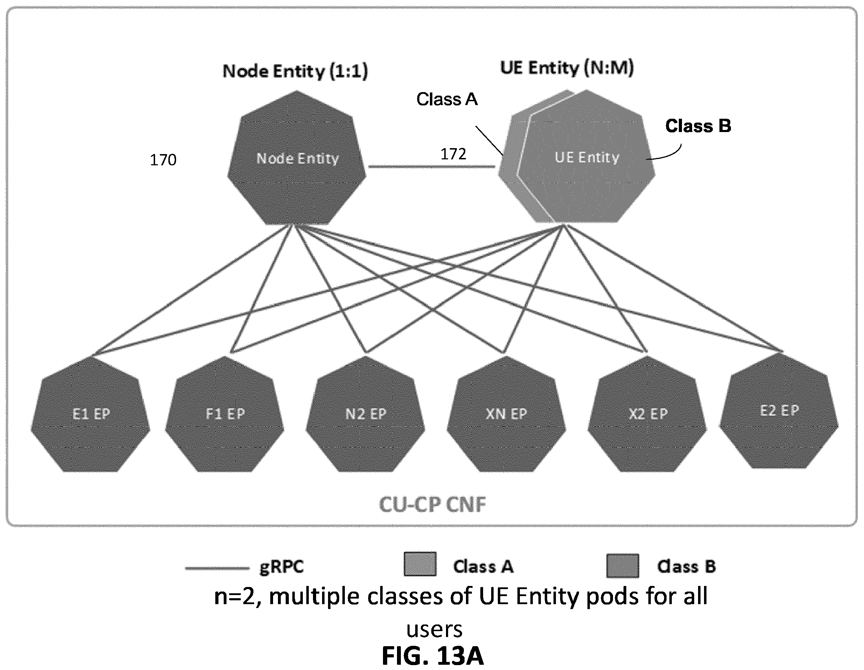

In the first implementation, as shown in Figure 13A, an exemplary method is described with n=2 classes for UE entity pods. Class A UE entity pods are for UEs carrying less critical traffic (such as eMBB), e.g., with k_a UE entity pods. Class B entity pods are for UEs carrying critical traffic (such as 5QI 83 / URLLC traffic), for example, with k_b UE entity pods.

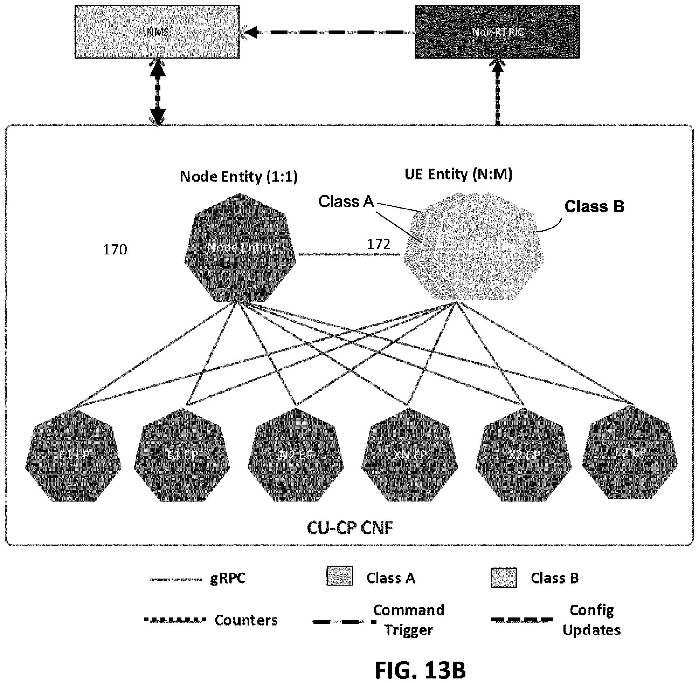

In the implementation, as shown in Figure 13B, another exemplary method is described with n=3 classes for UE entity pods: Class A1: UE entity pods are for eMBB-protected traffic (e.g., video conferencing for company meetings). Class A2 UE entity pods: eMBB are for unprotected traffic. Class B UE entity pods are for URLLC traffic.

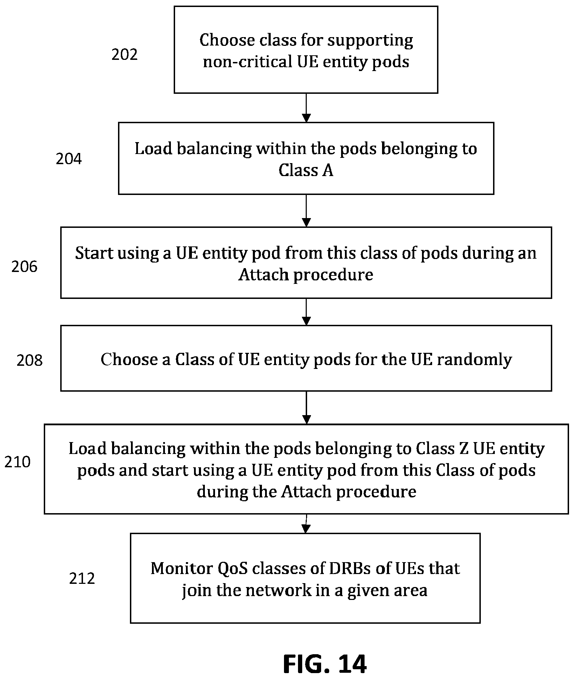

Figure 14 shows an example method for initial selection of a UE entity pod for a UE. At 202, a class is chosen for supporting non-critical UE entity pods (e.g., Class A shown in Figure 13A above). At block 204, a load balancing is done within the pods belonging to Class A UE entity pods. At block 206, the CU-CP starts using a UE entity pod from this class of pods during the Attach procedure.

At block 208 the CU-CP chooses a Class of UE entity pods for the UE randomly (e.g., Class Z, where Z is A or B in the above example). At block 210, the CU-CP does load balancing within the pods belonging to Class Z UE entity pods and starts using a UE entity pod from this class of pods during the Attach procedure.

At block 212, the CU continues to monitor QoS classes of DRBs of UEs that join the network in a given area. For example, the CU determines if a considerable number of UEs support DRBs which correspond to Class Y (e.g., Class A for non-critical traffic, and Class B for URLLC traffic, as discussed above in connection with Figure 13A). As a new UE attaches in the network, the CU chooses a UE entity pod from Class Y for this UE. If a CU is deployed to cater to UEs in an industrial environment, several UEs can end up being associated with a suitable UE entity pod in the first step itself.

It will be noted that the gNB can be deployed at various places (e.g., as part of macro network or in a private enterprise). For example, if a gNB (with CU/DU/RU) is deployed at a factory floor (e.g., for Industrial IoT applications with private 5G), large number of UEs may be utilizing URLLC services. Some UEs may also utilize URLCC-eMBB combination (or combo) services, while some UEs may use eMBB services only. A number of UEs utilizing URLLC services is expected to be on the higher side for Industrial IoT type of applications.

Once a CU/DU at some place, and if it is determined that a number of UEs keep utilizing URLLC services for a long time duration, it is very likely that this is a set up where large number of UEs need URLLC services (such as a factory floor). Observations such as this can be used to allocate a UE entity pod handling URLLC service for UEs in this set up in the beginning. It is likely that this UE uses URLLC service when it establishes DRBs. In this case, the node can be configured not to allocate this UE to another type of UE entity pod. If this UE starts an eMBB DRB in the beginning, an observation a period of time can be set, which can be configurable or dynamic - based on previous observations, to see whether the UE also starts a URLLC DRB. If it does, the system can be configured to activate a URLLC DRB before expiry of the waiting period of time. This UE does not need to be allocated to another type of pod. Otherwise, the UE can be allocated to eMBB pod.

This technique advantageously helps to reduce the number of attempts that are needed to find the right type of UE entity pod for that UE.

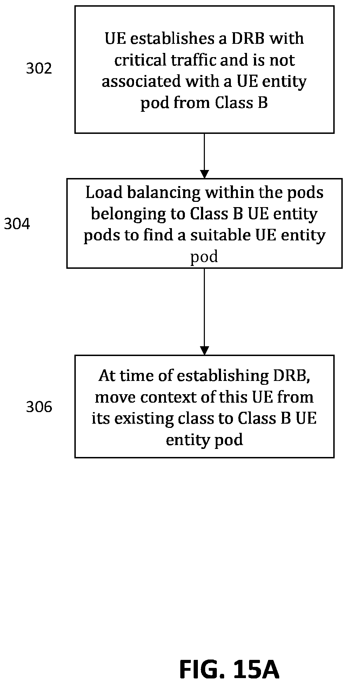

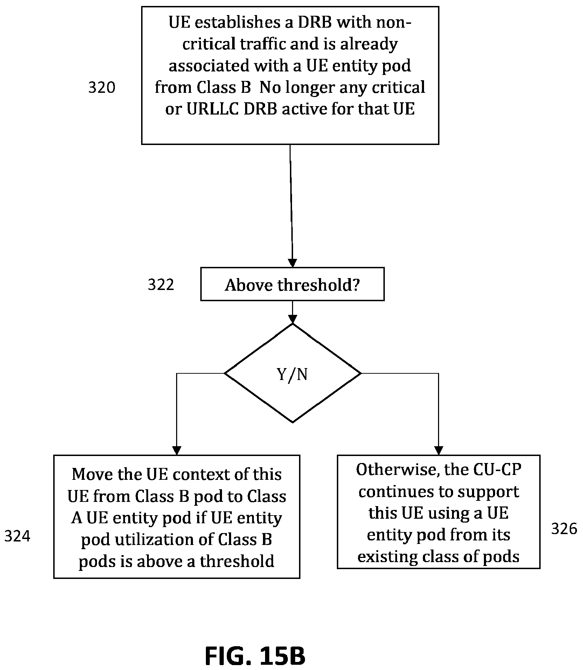

Figure 15A and Figure 15B show an example of methods for assignment of UE to a new pod for select set of UEs follows.

As shown in Figure 15A, at block 302, if UE establishes a DRB with critical traffic (e.g., 5QI 83 / URLLC traffic) and is not associated with a UE entity pod from Class B above, the context of this UE is moved from its existing class (such as Class A) to Class B UE entity pod at the time of DRB establishment. As before, at block 304 the CU-CP does load balancing within Class B to find a suitable UE entity pod. If not found, the CU-CP otherwise continues to support this UE using a UE entity pod from its existing class of pods.

As shown in Figure 15B, at block 320 if UE establishes a DRB with non-critical traffic (e.g. 5QI 9 / eMBB traffic) and is already associated with a UE entity pod from Class B but there is no longer any critical (or URLLC) DRB active for that UE now (e.g. it may have been active earlier but no active URLLC DRB now), at block 322 the CU-CP determines if UE entity pod utilization of Class B pods is on the higher side (e.g. above a threshold). If so, at block 324, the CU-UP moves the UE context of this UE from Class B pod to Class A UE entity pod if UE entity pod utilization of Class B pods is on the higher side (e.g. above a threshold). Otherwise, at block 326 The CU-CP continues to support this UE using a UE entity pod from its existing class of pods.

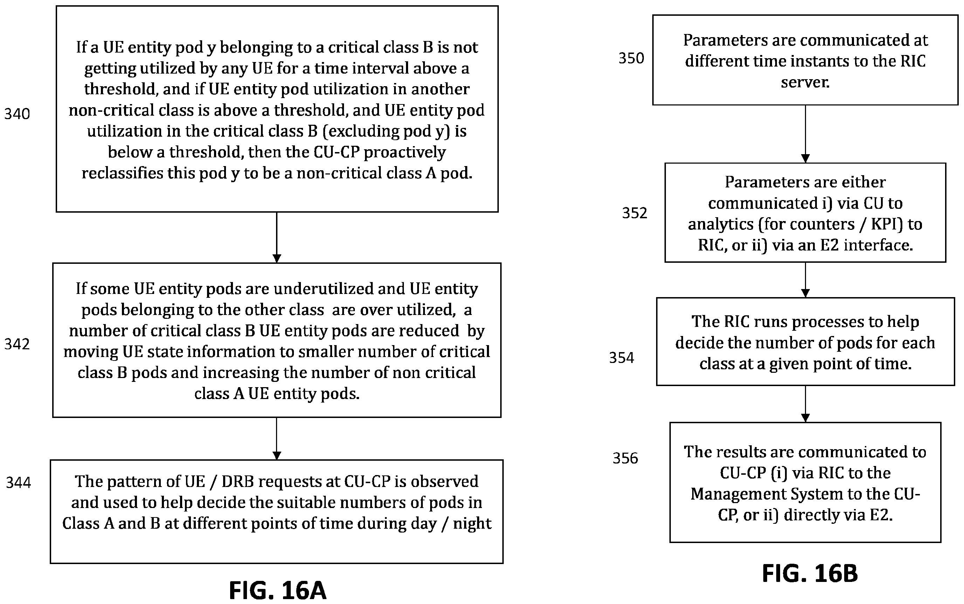

Figure 16A and Figure 16B show example methods for policy based proactive reclassification of UE entity pods in a CU-CP instance (at CU-CP and/or with RIC) follows.

As shown in Figure 16A, at block 340 if a UE entity pod Y belonging to one Class (such as Class B) is not getting utilized by any UE for a time interval above a threshold, and if UE entity pod utilization in class A is above a threshold, and UE entity pod utilization in Class B (excluding pod Y) is below a threshold, then the CU-CP proactively reclassifies this pod Y to be a Class A pod.

At block 342 if some UE entity pods (belonging to a class, say class B] are underutilized and UE entity pods belonging to the other class (i.e., class A in this example) are over utilized, the CU-CP reduces a number of class B UE entity pods by moving UE state information to smaller number of class B pods and increasing the number of class A UE entity pods. At block 344, the pattern of UE / DRB requests at CU-CP is observed and used to help decide the suitable numbers of pods in Class A and B at different points of time during day / night.

As shown in Figure 16B, at block 350, when the system is configured to use RIC, parameters are communicated at different time instants to the RIC server. Parameters include, for example, 5QI of DRBs for each UE for example, a number of UE entity pods belonging to different classes of pods, utilization of each class of UE entity pods, number of times when a UE entity pod went down, number of UEs that were associated with each pod that went down, number of UEs carrying critical traffic which could not be protected when their associated UE entity pod went down. At block 352, these parameters are either communicated i) via CU to analytics (for counters / KPI) to RIC, or ii) via an E2 interface. For communicating via E2, suitable fields are added in the E2 messages. At block 354, the RIC runs processes to help decide the number of pods for each class at a given point of time. Exemplary processes are shown with respect to Figure 13B above. At block 356. the results are communicated to CU-CP (i) via RIC to the Management System to the CU-CP, or ii) directly via E2. In the example method, non-real-time RIC and/or near-RT RIC can be used for this purpose. If there are high number of UEs carrying critical / URLLC traffic, near-real-time RIC can be employed.

This reclassification can be implemented using different policies with the above method. As the system reclassifies pods, the system also allocates standby pods. Higher priority can be given to protecting URLLC UE entity pods. For example, the exemplary implementation can use hot standby pods for URLLC pods, and/or use external-database-based methods for URLLC UE entity pods. Remaining pods are assigned as standby pods for the eMBB UE entity pods.

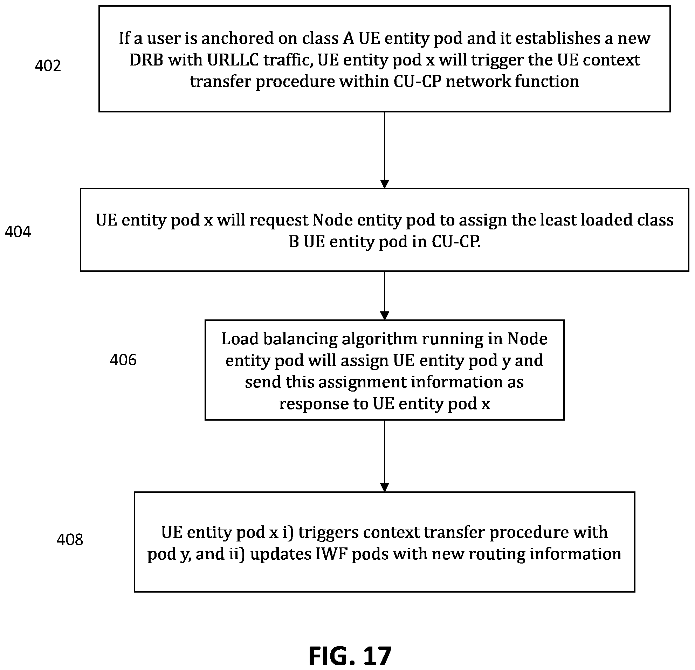

Figure 17 shows an example method is described in this section for transitioning UE entity pod in Class A to Class B for UEs trying to establish DRB for critical / URLLC traffic (or vice-versa) without interruption in service for the existing DRBs.

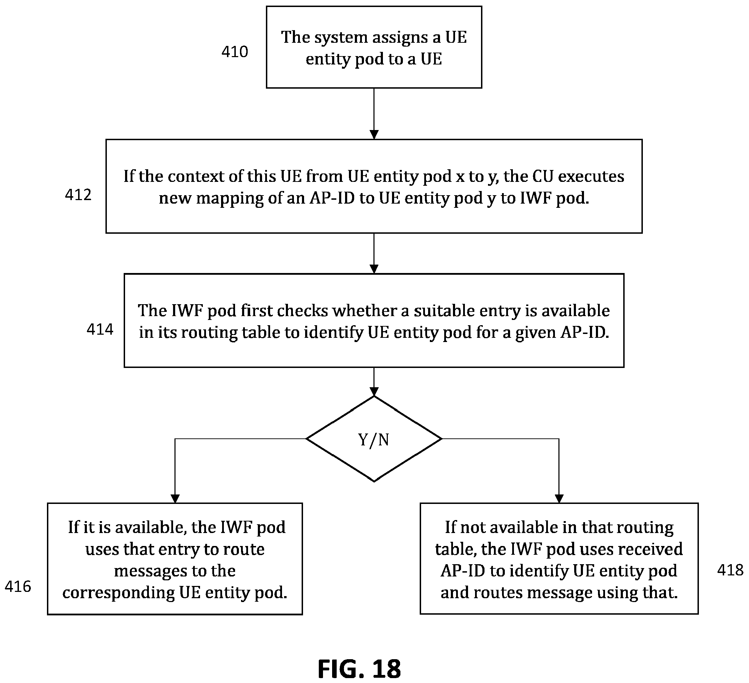

If a user is anchored on a class A UE entity pod and it establishes a new DRB with URLLC traffic, at block 402 UE entity pod x will trigger the UE context transfer procedure within CU-CP network function. At block 404, UE entity pod x will request Node entity pod to assign the least loaded class B UE entity pod in CU-CP. At block 406, a load balancing algorithm running in the Node Entity Pod will assign UE entity pod y and send this assignment information as response to UE entity pod x. At block 408, UE entity pod x will i) trigger context transfer procedure with pod y, and ii) update IWF pods with new routing information (see, e.g., below as disclosed with respect to Figure 18). All signalling messages exchanged during the transfer will be handled by UE entity pod x. Similar procedures can be followed to move a user from class B to class A UE entity pod when there are no critical DRBs active.

Figure 18 shows an example method for efficient routing of messages from IWF pods to UE entity pods follows. Application Protocol - IDs (AP-IDs) allocated by UE Entity pods can be used to identify UE entity pod at IWF. According to the present disclosure, this scheme is improved to support different classes of UE entity pods for implementations described herein. Advantageous methods for eMBB-URLLC combination are described below.

At block 410, the system assigns a UE entity pod to a UE using the existing method. At block 412, if the context of this UE from UE entity pod x to y (e.g., due to class of traffic it supports), the CU executes new mapping of an AP-ID to UE entity pod y to IWF pod. With this, the IWF pod routes incoming UE messages using two checks. At block 414, the IWF pod first checks whether a suitable entry is available in its routing table to identify UE entity pod for a given AP-ID. If it is available, at block 416 the IWF pod uses that entry to route messages to the corresponding UE entity pod. If not available in that routing table, at block 418 the IWF pod uses received AP-ID to identify UE entity pod and routes message using that.

According to an example, in case of F1-C traffic between DU and CU-CP, the following procedure can be utilized. F1AP is the application layer signalling protocol which uniquely identifies a logical connection associated with a UE over the F1 interface. A separate AP-ID is provided for each UE. Each UE entity pod is given a range of AP-IDs, and UEs associated with these AP-IDs are allocated to these respective pods. In an example scenario, UE u can be allocated to UE entity pod x (of type: eMBB) based on AP-ID(u), where AP-ID(u) is the AP-ID for the UE u for signalling traffic between DU and CU-CP. In this case, the UE entity pod x can serve a set of UEs with AP-IDs in the range [u1, u2] and AP-ID(u) for UE u is in this range. This UE now starts an URLLC DRB, and this UE to is reassigned UE entity pod y (of URLLC type). Earlier, the IWF pod (i.e., F1EP pod) had the mapping for AP-IDs [u1, u2] to the UE entity pod x in its routing table. The table can then be updated the routing table of the F1EP pod as follows:
- Level I:
   ∘ AP-ID u maps to UE entity pod y [updated entry].
- Level II:
   ∘ AP-IDs [u1, u2] map to UE entity pod x (with a condition that AP-IDs which are in level I are not considered in Level II even if they are part of the range [u1, u2]);
   ∘ AP-IDs [u2+1, u3] map to UE entity pod x1 (with a condition that AP-IDs which are in level I are not considered in Level II even if they are part of the range [u2+, u3]);
   ∘ and as so on.

As will be appreciated, the AP-ID of UE u is not changed even though the UE entity pod with which it is associated is changed. The routing table is changed as disclosed above.

On receiving a signalling message for the UE u (from UE to DU to CU-UP) with AP-ID(u), the F1EP pod first looks at Level I routing table mentioned above, and knows that it needs to route this message to the UE entity pod y. If F1EP pod receives a signalling message for another UE z1 and finds that the AP-ID of this UE, i.e., AP-ID (z1), is not in the Level I routing table mentioned above, F1EP pod finds a suitable pod from Level 2 routing table. For example, if AP-ID(z1) is in the range [u2+1, u3], F1EP pod knows that it needs to route this message to the UE entity pod x1. If the associated UE entity pod for this UE z1 changes at a later point in time, an entry is created for this UE z1 also in the Level I of the routing table mentioned above (the entry listing the new UE entity pod with which UE z1 is associated).

Advantageous features of High Availability (HA) capabilities of the exemplary methods according to the present disclosure include giving higher priority to protect Class B UE entity pods when one or more UE entity pods go down. Also, session data of users matching the selection criteria (e.g., Class B here) will be replicated in standby nodes. Smart HA capabilities ensures that only subset of users matching the selection criteria are synchronized across active and standby. This provides, for example, the following benefits: i) reduce the data volume significantly and the resources (CPU / memory) required to support HA; ii) overall cost of the solution is reduced; and iii) switchover is more deterministic and consistent.

Example Implementation 2: in a second implementation, described is a system and method for Efficient management of DPS pods / CU-UP for eMBB-URLLC combination scenarios.

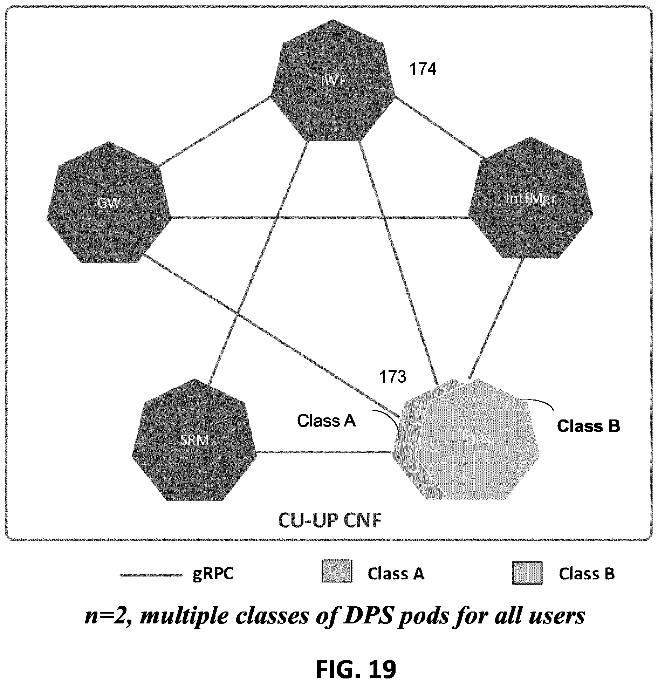

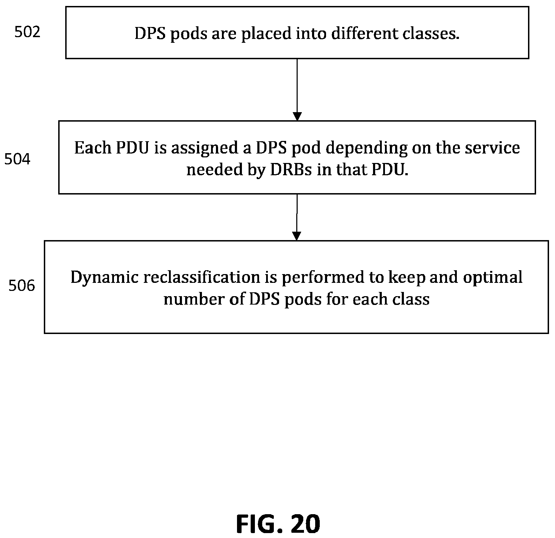

Figure 19 shows an exemplary architecture for management of DPS pods / CU-UP for eMBB-URLLC combinations. Figure 20 shows a high level exemplary logical flow. As in the first implementation above, at block 502, DPS pods 173 are placed into different classes. For example, as shown in Figure 19, one set of DPS pods 173 is for Class A / eMBB PDUs / DRBs, and another set of DPS pods 173 for Class B / URLLC PDUs / DRBs). At block 504 each PDU is assigned a DPS pod 173 depending on the service needed by DRBs in that PDU. In the example case of UE z with one eMBB PDU and another URLLC PDU, the following exemplary embodiments can be implemented.

First, each PDU can be assigned separate DPS pods 173 depending on the category of PDU traffic. If eMBB DPS pod goes down, the IWF pod 174 detects it and sends eMBB Bearer release message towards CU-CP. It will be noted that the URLLC PDU session is protected at the DPS, and the UE context is still protected in CU-UP with the URLLC UE entity pod in this case. Both PDUs of this UE can be assigned a pod of the same type, for instance, a URLLC pod in this example.

In an alternative A, the context of URLLC as well as eMBB PDU using URLLC DPS Pod can be protected. In an alternative B, the context of only the URLLC DRB is protected (e.g., GTP-U tunnel IDs for URLLC DRB between CU-UP and DU, and GTP_U tunnel IDs for the PDU session carrying URLLC DRBs between UPF and CU-UP). The context for the eMBB DRB is not protected in alternative B.

As in the first Implementation, at block 506, dynamic reclassification is performed to keep an optimal number of DPS pods 173 for each class (e.g., Class A and B) at any given time. This implementation also supports a RIC-based approach as described above with respect to Figures 16A-16B to find suitable number of DPS pods 173 for each class at a given time. DPS pods 173 for class B are hosted on different HW to support PDCP replication, which is needed for URLLC use cases. In this example, DPS pods 173 carrying Class B PDUs are protected. DPS pods 173 carrying Class A PDUs may or may not be protected.

Exemplary advantages of example Implementations 1 and 2 discussed above are numerous. The example Implementations provide Smart HA capability. Session data of users matching the selection criteria are replicated in standby nodes. Smart HA ensures that only those users matching the selection criteria are synchronized across active and standby nodes.

The example Implementations include a process to dynamically select a UE entity pod for each UE. They also include a process to dynamically select a DPS pod for each PDU session / DRB. Another advantage is that the example Implementations provide a proactive selection (and reclassification) for UE entity pods and DPS pods of different classes, which selection and reclassification can be implemented with or without RIC-based mechanisms. They also reduce the data volume significantly and the resources (CPU / memory) required to support HA.

The Implementations described herein reduce the overall cost of the solutions for pod management. They also result in switchovers being more deterministic and consistent. Further advantages include i) shorter data recovery time in case of external DB, and ii) shorter switchover time. They also result in near zero service impacts during the switchover.

The example Implementations enable synchronization of the node level information for user-defined contexts, for example, selected DUs deployed at key cell sites, or group of DUs selected, or group of neighbor eNBs/gNBs, AMFs, CU-UPs, and so on. Users who do not meet the selection criteria may be impacted during the failover.

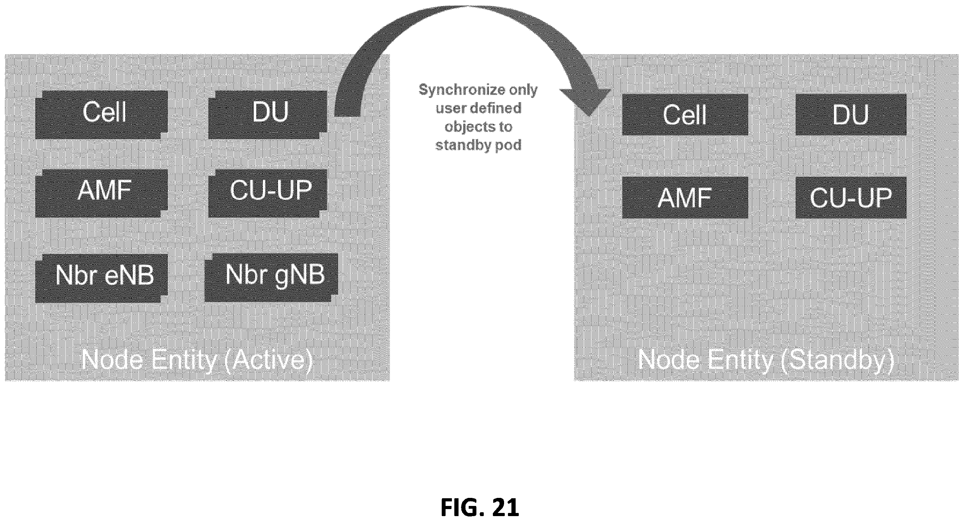

As a variation of the example Implementations 1 and 2 described above, the core idea of the example methods can be applied to Node Entity Pods 170. This variation can include the following exemplary characteristics: a) Critical classes / objects (e.g., class B) to be protected in the Node Entity Pod 170 are applied; b) the critical classes of node level information across active and standby pods are synchronized; and c) user defined classification of critical classes and objects are supported. For example, as shown in Figure 21, user defined contexts such as selected cells, DUs deployed at key cell sites or group of DUs, specific or group of neighbor e/gNB, AMFs, CU-UPs, and so on are synchronized only to user defined objects in the standby pod.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the invention.

## Claims

1. A method comprising:
at a network CU, establishing a plurality of Pod Classes including a critical Pod Class and a non-critical Pod Class;
classifying and assigning Pods to the plurality of Pod Classes;
monitoring QoS classes of DRBs of UEs that join the CU network;
determining if one or more of the UE DRBs correspond to one the plurality of Pod Classes; and
allocating the UEs to the Pod corresponding the one or more UEs DRB's Pod Class.

2. The method of claim 1, further comprising:
choosing the non-critical Pod Class for the plurality of the Pods;
load balancing within the plurality of non-critical Pods;
using one of the plurality of non-critical Pods during an Attach procedure, or randomly choosing one of the Pod Classes from the plurality of Pod Classes;
load balancing within a plurality of Pods belonging to the randomly chosen Pod Class;
using one of the plurality of Pods from the randomly chosen Pod Class during the Attach procedure;
monitoring the QoS classes of the DRBs of the UEs CU network;
determining if the one or more UEs DRBs correspond to a Pod Class of the plurality of Pod Classes; and
allocating corresponding Pods to the Pod Class for the corresponding one or more UEs.

3. The method of any of the above claims, further comprising:
setting a predetermined time period for observing if the one or more UEs use a high amount traffic for critical Pod Class corresponding to one of the plurality of Pod classes; and
activating the DRB for the one or more UEs to the critical Pod Class without allocating the one or more UEs to another of the plurality of Pod Classes.

4. The method of any of the above claims, further comprising:
if a UE establishes a DRB with critical traffic and is not associated with the critical Pod Class, move the UE from its existing Pod Class to the critical Pod Class at the time of DRB establishment; or
if a UE establishes a DRB with non-critical traffic and is already associated with a critical Pod Class, but there is no longer any critical DRB active for that UE, move the UE from its existing critical Pod Class to the non-critical Pod Class.

5. The method of any of the above claims, further comprising:
reclassifying one or more of the Pods, the reclassifying including:
if a first Pod of the plurality of Pods assigned to the critical Pod Class is not getting utilized by any UE for a time interval above a threshold, and if a Pod utilization in the non-critical Pod Class is above the threshold, and a Pod utilization in the non-critical UE Pod Class other than the first Pod is below the threshold, then reassigning the first Pod to the non-critical Pod Class; or
if some of the plurality of the critical Pods are underutilized, and one or more Pods belonging to the non-critical Pod Class are over utilized, reducing a number of the critical Pods by moving UE state information to a smaller number of the critical Pods and increasing the number of non-critical Pods.

6. The method of any of the above claims, further comprising:
communicating parameters to an RIC, preferably using a non-real-time RIC or near-RT RIC as the RIC, wherein, if there are high number of the UEs carrying critical traffic, a near-real-time RIC is employed;
at the RIC, deciding a one or more of the plurality of the Pods for each Pod;
communicating the decision results to the CU-CP.

7. The method of any of the above claims, wherein at a CU-CP, the plurality of Pod Classes comprise UE Entity Pod Classes including a critical UE Entity Pod Class and a non-critical UE Entity Pod Class, further comprising:
when moving the UE from its existing UE Entity Pod Class to the critical UE Entity Pod Class at the time of DRB establishment, the CU-CP does load balancing within the Critical UE Entity Pod Class to identify a suitable the Critical UE Entity Pod Class or the CU-CP continues to support the UE using a critical UE Entity Pod from the existing critical UE Entity Pod Class; or
when the UE is moved from the existing critical UE Pod Class to the non-critical UE Entity Pod Class, if a UE Entity Pod utilization of the critical UE Pod Class Pods is above a threshold, or otherwise, the CU-CP continues to support this UE using a UE entity pod from its existing class of pods.

8. The method of claim 7, further comprising:
if a UE is anchored on a non-critical UE Entity Pod, and the UE establishes a new DRB with critical traffic, triggering, by the non-critical UE entity, a UE context transfer procedure within the CU-CP;
requesting, by the non-critical UE Entity Pod, that a Node Entity Pod assign a least loaded Critical UE Entity Pod in CU-CP;
assigning, by a load balancing algorithm running in the Node Entity Pod the Critical UE Entity Pod for the UE context transfer;
sending the assignment information as a response message to the non-critical UE entity pod;
triggering, by the non-critical UE entity pod, a context transfer procedure with Critical UE Entity Pod and
updating an IWF Pod with new routing information; or
if a UE is anchored on a critical UE Entity Pod, and the UE establishes a new DRB with non-critical traffic, triggering, by the critical UE entity, a UE context transfer procedure within the CU-CP;
requesting, by the critical UE Entity Pod, that a Node Entity Pod assign non-Critical UE Entity Pod in CU-CP;
assigning, by a load balancing algorithm running in the Node Entity Pod the non-Critical UE Entity Pod for the UE context transfer;
sending the assignment information as a response message to the critical UE entity pod;
triggering, by the critical UE entity pod, a context transfer procedure with non-critical UE Entity Pod; and
updating an IWF Pod with new routing information.

9. The method of claims 7 or 8, further comprising:
assigning a UE Entity Pod of the plurality of UE Entity Pods to a UE;
if the context of the UE from the assigned UE Entity Pod is to be moved to another UE Entity Pod of the plurality of UE Entity Pods, executing a new mapping of an AP-ID to the other UE Entity Pod at the IWF pod;
routing, by the IWF pod, incoming UE messages by
first checking whether a suitable entry is available in a routing table to identify the other UE Entity pod for a given AP-ID, and if available, using the entry to route messages to the corresponding other UE Entity Pod, or if not available in the routing table, using the received AP-ID to identify an available UE Entity Pod and routing message using the available UE Entity Pod.

10. The method of any of claims 7-9, further comprising, for F1-C traffic between a DU and the CU-CP:
uniquely identifying a logical connection associated with a UE over a F1 interface by a FLAP application layer signaling protocol;
providing separate AP-IDs for each UE;
giving each of the plurality of UE Entity Pods a range of AP-IDs, and
allocating UEs associated with the range of the AP-IDs to the respective plurality of UE Entity Pods.

11. The method of claim 1, where at a CU-UP,
the plurality of Pod Classes comprise DPS Pod Classes including a critical DPS Pod Class and a non-critical DPS Entity Pod Class; and
a set of non-critical DPS pods being for eMBB PDUs / DRBs, and another set of critical DPS pods are for URLLC PDUs / DRBs;
wherein each of a plurality of PDUs are assigned a critical DPS Pod or a non-critical DPS Pod depending on the service needed by the DRBs in each PDU.

12. The method of claim 11, further comprising:
assigning each of the PDUs a separate DPS pod depending on the class of PDU traffic; and if a MBB non-critical DPS Pod fails, an IWF pod detects the failure and sends and eMBB Bearer release message towards CU-CP;
wherein (i) the context of the URLLC DRB as well as the eMBB PDU DRB using the URLLC critical DPS Pod can be protected, or (ii) the context of only the URLLC using the critical DRB Pod is protected and the context for the eMBB DRB is not protected.

13. The method of claim 12, wherein GTP-U tunnel IDs for the URLLC DRB between CU-UP and DU, and GTP U tunnel IDs for a PDU session carrying the URLLC DRB between UPF and CU-UP are protected.

14. The method of claim 1, where at a CU-CP, the plurality of Pod Classes comprises Node Entity Pod Classes including a critical Node Entity Pod Class and a non-critical Node Entity Pod Class., the method further comprising:
applying at least one critical Node Entity Class to at least one Node Entity Pod; and
synchronizing Node level information for the at least one critical Node Entity Class across an active Node Entity Pod and a standby Node Entity Pod,
wherein the Node level information includes user defined classification of the at least one Node Entity Critical Classes and user defined objects therefor.

15. The method of claim 14, further comprising: synchronizing only user defined objects from the active Node Entity Pod to the standby Node Entity Pod.
